## Europäisches Patentamt

## European Patent Office

## Office européen des brevets

(11) Numéro de publication: **0 161 155**
**B1**

# FASCICULE DE BREVET EUROPÉEN

(45) Date de publication du fascicule du brevet:
08.06.88

(51) Int. Cl.⁴: **F 16 F 1/30,** B 60 G 11/10

(21) Numéro de dépôt: **85400663.2**

(22) Date de dépôt: **03.04.85**

(54) Fixation d'un ressort à lame en matériau composite.

(30) Priorité: **03.04.84 FR 8405212**

(43) Date de publication de la demande:
**13.11.85 Bulletin 85/46**

(45) Mention de la délivrance du brevet:
**08.06.88 Bulletin 88/23**

(84) Etats contractants désignés:
**DE GB IT**

(56) Documents cité:
**FR-A-692 763**
**GB-A-908 481**
**GB-A-2 068 856**
**GB-A-2 100 835**
**US-A-3 195 876**

(73) Titulaire: **RENAULT VEHICULES INDUSTRIELS Société Anonyme dite:, 129 rue Servient "La Part Dieu", F-69003 Lyon (FR)**

(72) Inventeur: **Mounier- Poulat, François, Les Baboulières, F-38540 Heyrieux (FR)**
Inventeur: **Beaupellet, Jean, 17, Lotissement les Joncquilles, F-38110 St. Clair de la Tour (FR)**
Inventeur: **Gardier, Patrick, Le Parc Tête d'Or 4, allée Marcel Achard, F-69100 Villeurbanne (FR)**

(74) Mandataire: **Réal, Jacques, Régie Nationale des Usines Renault SCE 0804, F-92109 Boulogne Billancourt Cedex (FR)**

LIBER, STOCKHOLM 1988

## Description

La présente invention se rapporte à la fixation d'un ressort à lame en matériau composite, plus particulièrement applicable aux véhicules lourds.

Les lames de ressort en matériau composite peuvent être obtenues par moulage ou pultrusion. Rappelons que l'on utilise dans ce cas de préférence une résine thermodurcissable du type polyesters ou époxydiques comportant un catalyseur activable à la chaleur, et renforcée par des éléments unidirectionnels tels que des fils, des mèches de verre, des rubans. De ce fait, les produits obtenus présentent une anisotropie de leur résistance mécanique, ce qui les différencie très sensiblement des lames de ressort en acier ; par conséquent, les techniques de fixation usuelles de ces dernières ne sont pas transposables aux ressorts à lame en matériau composite.

On connaît bien, par exemples des moyens de fixation de ressorts à lames métalliques, selon lesquels les efforts longitudinaux et transversaux sont pris en charge par un boulon qui les traverse verticalement et les solidarise à leurs appuis. C'est ainsi le cas des dispositifs décrits dans les brevets français FR-A-692 763 et britannique GB-A- 908 481.

Par analogie, on a également utilisé le boulonnage de la lame d'un ressort en matière synthétique sur son support ; mais cette disposition l'affaiblit au niveau de l'ouverture de passage du boulon.

On peut également assurer la fixation par serrage non contrôlé d'une bride disposée directement sur la lame d'un ressort en matière synthétique, ce qui peut conduire à l'écrasement de ce matériau, dont la résistance dans la direction perpendiculaire aux fibres de renforcement est faible.

On pourrait aussi effectuer un serrage d'intensité limitée de la lame, en intercalant en outre un ou plusieurs éléments de caoutchouc entre la bride de serrage et la lame, conformément à l'enseignement du brevet britannique GB-A-2 100 835.

Toutefois l'adhérence entre le caoutchouc et la lame destinée à reprendre des efforts longitudinaux notamment au démarrage et au freinage du véhicule, qui est acceptable pour un véhicule automobile léger, est insuffisante pour les poids lourds.

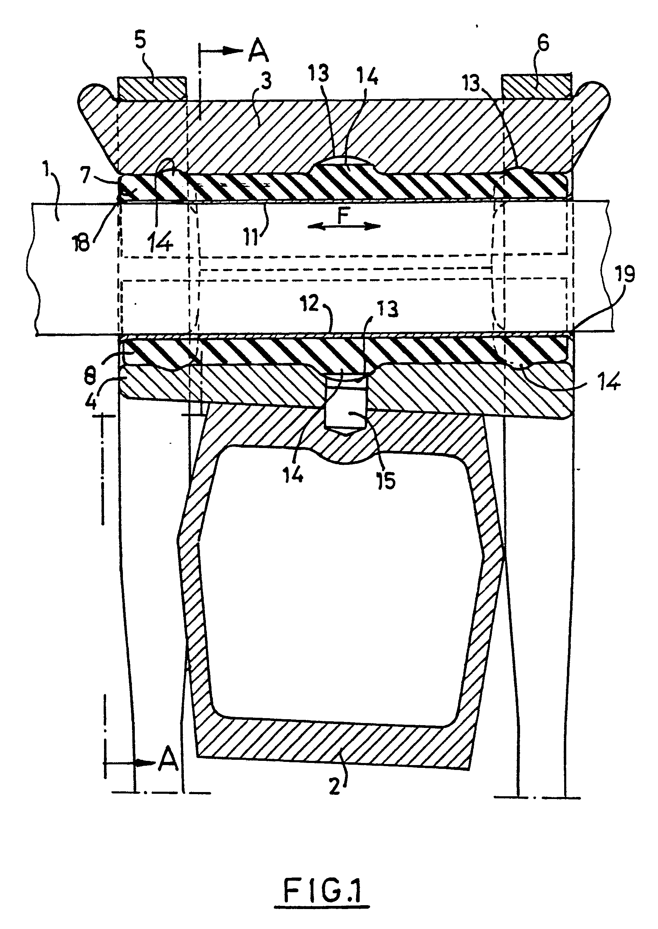

La présente invention a pour objet de dispositif de fixation de ressorts en matériau composite, en particulier sur un essieu, palliant les inconvénients précédents et permettant une bonne prise en compte des efforts longitudinaux éventuels. Ce résultat est obtenu en adhérisant des tôles intermédiaires en acier sur la face interne des éléments en caoutchouc disposés entre la bride de serrage et la lame de ressort, cette dernière étant alors collée sur les faces libres desdites tôles. L'invention sera maintenant décrite à titre d'exemple non limitatif au regard des figures 1 à 3 ci-jointes, qui se rapportent respectivement:

-la figure 1, à une vue partielle, en coupe longitudinale, du système de fixation de l'invention ;

-la figure 2, à une vue en coupe, transversale et selon A-A, de la figure 1, avant le serrage ;

-la figure 3, à une vue analogue, après le serrage.

En référence a la figure 1, on décrira maintenant la fixation de la lame de ressort 1 en matériau synthétique renforcé par des fibres, connu en soi, à l'essieu 2 ; celle-ci est assurée au moyen du serrage de deux sabots métalliques 3 et 4 par des étriers 5 et 6, disposés aux extrémités antérieure et postérieure de ces derniers.

On voit qu'entre les sabots 3 - 4 et la lame 1, sont disposées deux pièces en caoutchouc 7 - 8, en forme de U, dont les rebords 9 - 10 recouvrent partiellement les côtés verticaux et latéraux de la lame 1 ; à la face interne des pièces en caoutchouc 7 - 8, sont adhérisées des tôles d'acier 11 - 12, collées à la lame 1. Ces tôles 11 - 12 constituent un intermédiaire nécessaire à la solidarisation de la lame 1 en matériau synthétique renforcé et des pièces en caoutchouc 7 - 8, dont la liaison directe à l'aide d'une colle structurelle n'est pas possible dans de bonnes conditions de reprise des efforts longitudinaux présents en phases d'accélération et de freinage d'un véhicule lourd figurés par la flèche F. De plus, ces tôles 11 - 12 améliorent la répartition des pressions sur la lame 1 et en particulier, du fait de leur extrémités recourbées, évitent les concentrations de contraintes au droit de l'encastrement du ressort dans le dispositif de bridage.

On remarquera que les surfaces des sabots 3 - 4 en contact avec les pièces 7 - 8 comportent des dépressions 13 totalement ou partiellement comblées par des surépaisseurs 14 des pièces en caoutchouc 7 - 8 de manière à permettre un bon maintien relatif des pièces en cause.

On notera encore la présence d'un pion 15, qui assure le positionnement du sabot 4 sur l'essieu 2.

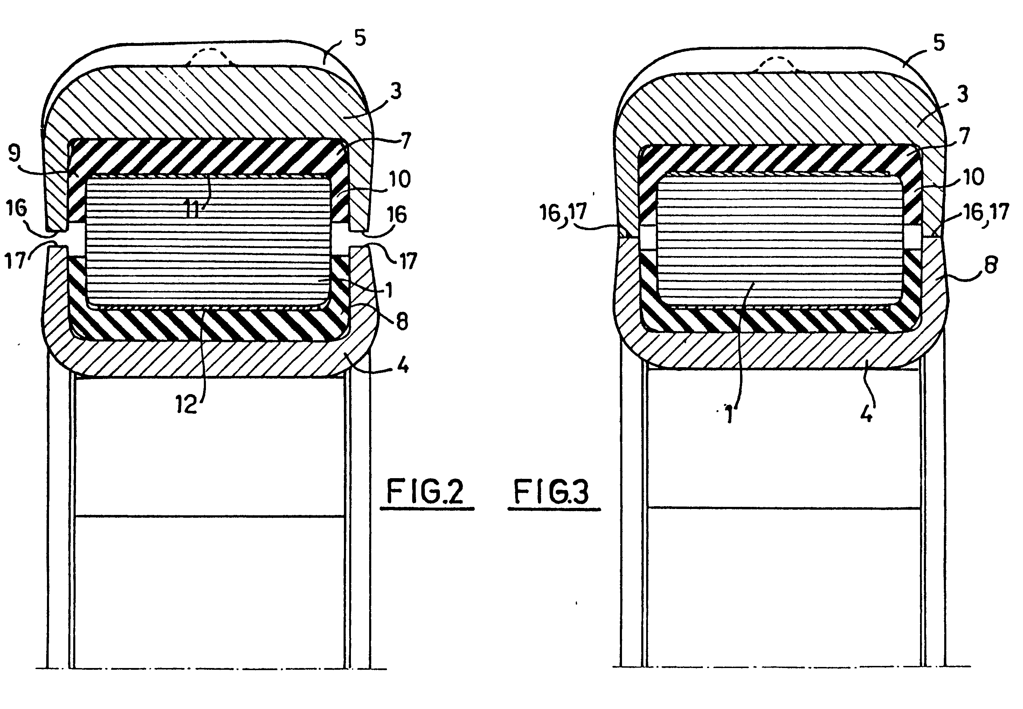

En se référant aux figures 2 et 3, on constate l'effet du serrage des étriers 5 - 6 sur les pièces constituant la fixation selon l'invention ; celui-ci se poursuivra tant que les faces 16 - 17, en regard des sabots 3 - 4, ne seront pas mises en contact, ce qui constitue ainsi une butée positive ; lorsque tel sera le cas, les pièces en caoutchouc 7 - 8 auront atteint l'épaisseur correspondant à une compression contrôlée, pour laquelle elles répartiront de façon adéquate les pressions à la surface de la lame 1 en matériau composite, tout en autorisant un certain débattement de celle-ci et en amortissant la transmission des vibrations de l'essieu au châssis du véhicule.

**Revendication**

Fixation d'un ressort à lame en matériau composite (1), notamment à un essieu (2) de véhicule lourd, du type effectué par le serrage d'étriers (5-6) agissant sur des sabots métalliques (3-4) disposés de part et d'autre de la lame du ressort (1), à la surface de laquelle sont interposées deux pièces en caoutchouc (7-8) en forme de U, caractérisée par le fait qu'à la face interne desdites pièces en caoutchouc (7-8) sont adhérisées des tôles d'acier (11-12), dont la face libre est collée à la lame du ressort (1).

**Patentanspruch**

Befestigung einer Blattfeder (1) aus Mehrkomponentenwerkstoff, insbesondere an der Achse (2) eines Nutzfahrzeugs, mittels Klemmbügeln (5-6), die auf metallische Lagerböcke (3-4) einwirken, welche beidseits der Blattfeder (1) angeordnet sind und auf deren Oberfläche zwei U-förmige Kautschukteile (7-8) angeordnet sind, dadurch gekennzeichnet, daß auf den Innenflächen der Kautschukteile (7-8) Stahlbleche (11, 12) angeklebt sind, deren freie Flächen mit der Blattfeder (1) verklebt sind.

**Claim**

Fixing for a leaf spring (1) of composite material, in perticlar to a heavy vehicle axle (2), of the type which is effected by the clamping of stirrups (5, 6) acting on metal shoes (3, 4) disposed on respective sides of the leaf of the spring (1), at the surface of which are interposed two U-shaped rubber portions (7, 8), characterised in that steel plates (11, 12) are adhered to the inside face of said rubber portions (7, 8), the free face of the steel plates being glued to the leaf of the spring (1).

FIG.1

**FIG.2**   **FIG.3**

0 161 155